(19) Europäisches Patentamt
European Patent Office
Office européen des brevets

(11) EP 1 416 006 A1

(12) EUROPEAN PATENT APPLICATION

(43) Date of publication:
06.05.2004 Bulletin 2004/19

(51) Int Cl.7: **C08G 18/08**, C08G 18/66, C09D 11/00

(21) Application number: **03078301.3**

(22) Date of filing: **20.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.10.2002 US 284958**

(71) Applicant: **EASTMAN KODAK COMPANY**
**Rochester, New York 14650 (US)**

(72) Inventors:
- **Yacobucci, Paul D., c/o Eastman Kodak Company Rochester, New York 14650-2201 (US)**
- **Yau, Hwei-Ling, c/o Eastman Kodak Company Rochester, New York 14650-2201 (US)**

(74) Representative: **Weber, Etienne Nicolas et al**
**Kodak Industrie,**
**Département Brevets,**
**CRT,**
**Zone Industrielle**
**71102 Chalon sur Saône Cedex (FR)**

# (54) Novel polyurethane materials for pigmented ink jet ink

(57) An ink jet ink composition comprising: pigment; water or water and an optional water-miscible co-solvent; polyurethane of the general Formula II:

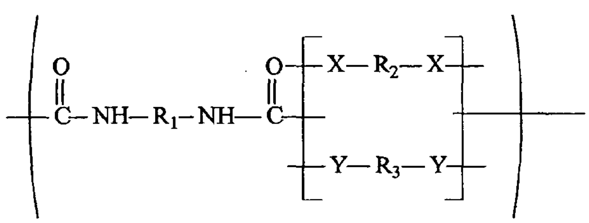

II

wherein: $R_1$ represents the central portion of the monomeric unit that is the polymerization product of a diisocyanate monomer, $R_2$ represents the central portion of a monomeric unit that is the polymerization product of a diamine, a diol or a polyol; $R_3$ is the central portion of a monomeric unit containing a phosphonate, carboxylate or sulfonate group; and X and Y can be the same or different and are -O- or -N- atom. An ink jet printing method is also presented.

EP 1 416 006 A1

## Description

### FIELD OF THE INVENTION

This invention relates to pigmented inks for ink jet printing employing water-dispersible polyurethanes of preferred composition.

### BACKGROUND OF THE INVENTION

Ink jet printing is a non-impact method for producing images by the deposition of ink droplets on a substrate (paper, transparent film, fabric, etc.) in response to digital signals. Ink jet printers have found broad applications across markets ranging from industrial labeling to short run printing to desktop document and pictorial imaging.

In ink jet recording processes, it is necessary that the inks being used meet various performance requirements. Such performance requirements are generally more stringent than those for other liquid ink applications, such as for writing instruments (e.g., a fountain pen, felt pen, etc.). In particular, the following conditions are generally required for inks utilized in ink jet printing processes:

(1) The ink should possess physical properties such as viscosity, surface tension, and electric conductivity matching the discharging conditions of the printing apparatus, such as the driving voltage and driving frequency of a piezoelectric electric oscillator, the form and material of printhead orifices, the diameter of orifices, etc;
(2) The ink should be capable of being stored for a long period of time without causing clogging of printhead orifices during use;
(3) The ink should be quickly fixable onto recording media, such as paper, film, etc., such that the outlines of the resulting ink dots are smooth and there is minimal blotting of the dotted ink;
(4) The printed image should be of high quality, such as having a clear color tone and high density, have high gloss and high color gamut;
(5) The printed image should exhibit excellent waterfastness (water resistance) and lightfastness (light resistance);
(6) The printed (ink) images should have good adhesion to the surface of image receiving elements and should be durable and highly resistant to physical and mechanical scratches or damages;
(7) The ink should not chemically attack, corrode or erode surrounding materials such as the ink storage container, printhead components, orifices, etc;
(8) The ink should not have an unpleasant odor and should not be toxic or inflammable; and
(9) The ink should exhibit low foaming and high pH stability characteristics.

The inks used in various ink jet printers can be classified as either dye-based or pigment-based. A dye is a colorant that is molecularly dispersed or solvated by a carrier medium. The carrier medium can be a liquid or a solid at room temperature. A commonly used carrier medium is water or a mixture of water and organic cosolvents. Each individual dye molecule is surrounded by molecules of the carrier medium. In dye-based inks, no particles are observable under the microscope. Although there have been many recent advances in the art of dye-based ink jet inks, such inks still suffer from deficiencies such as low optical densities on plain paper and poor lightfastness. When water is used as the carrier medium, such inks also generally suffer from poor waterfastness.

Pigment-based inks have been gaining in popularity as a means of addressing these limitations. In pigment-based inks, the colorant exists as discrete particles. These pigment particles are usually treated with addenda known as dispersants or stabilizers that serve to keep the pigment particles from agglomerating and/or settling out.

Pigment-based inks suffer from a different set of deficiencies than dye-based inks. One deficiency is that pigment-based inks interact differently with specially coated papers and films, such as transparent films used for overhead projection and glossy papers and opaque white films used for high quality graphics and pictorial output. In particular, it has been observed that pigment-based inks produce imaged areas that are entirely on the surface of coated papers and films, which results in images that have poor dry and wet adhesion properties and can be easily smudged. In recent years, ink jet receivers have been developed to have both high gloss and high porosity to give fast drying capabilities. However, scratch mark smudges are more visible on high gloss receivers. In order to provide a pigmented ink composition which can be used in printing images on an ink jet porous glossy receiving element having acceptable durability and smudging resistance, polymers are often used as additive in pigmented inks.

U.S. Patent 6,533,408 discloses classes of water-dispersible polymers, including aqueous polyurethane dispersions, that may be used in pigmented inks for both durability and ozone stability improvement. However, not all such dispersible polymers can be jetted from inkjet printhead easily and reliably.

JP 2000-1639A discloses the use of water-dispersible polyurethane consisting of a segment of general formula (1) below.

$$-(CH_2\text{-}CH_2\text{-}O)_n- \quad (1)$$

wherein:

n is an integer of 4 to 220.

Furthermore, the polyurethane has an acid number of 10 to 200 mg/KOH/g polymer, and a molecular weight of 2000 to 100000. Acid number is generally defined as mg of KOH required to neutralize 1 g of polymer solids. However, images formed from pigmented inks containing these polymers exhibit poor durability, especially if the imaged area has been damped by aqueous fluids. It is believed that the polyether polyol segment of structure (1) confers water sensitivity.

It is an object of this invention to provide an ink jet ink composition containing a water-dispersible polyurethane so that images printed on the surface of an ink jet receiving element using the ink composition will have improved physical durability such as scratch and smudging resistance while maintaining reliable jettability from ink jet printheads to produce quality images at all time.

## SUMMARY OF THE INVENTION

These and other objects are achieved in accordance with this invention which relates to an ink jet ink composition comprising water, preferably from 40.0-99.0% by weight; a pigment, preferably from 0.1-20.0% and most preferably from 0.2-15.0 by weight; a water miscible co-solvent, usually from 0-70%, preferably from 1-50%, and most preferably from 5-40% by weight; and a polyurethane, from 0.1 to 20.0, % preferably 0.2-15.0, the polyurethane having the general formula (II) described below. All weight percentages above are based on the weight of the entire ink composition.

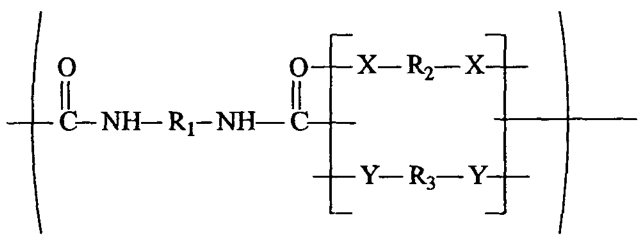

(II)

wherein:

The $R_1$ moiety is the central portion of the monomeric unit that is the polymerization product of a diisocyanate monomer, $R_2$ represents the central portion of a monomeric unit that is the polymerization product of a diamine, a diol or a polyol, such as polyester polyol, polycarbonate polyol and polylactone polyol; $R_3$ is the central portion of a monomeric unit containing a phosphoric acid, carboxylic acid or sulfonic acid group, carboxylic acid being preferred, X and Y can independently be the same or different, are -O- or - N- atom. By the term "central portion" is meant the monomeric unit minus the functional groups in the monomeric unit.

Furthermore, the polyurethane of this invention has a Tg of -40 to 200 degrees C, preferably 20 to 180 degrees C, and an weight average molecular weight of 2,000 to 200,000, preferably 4,000 to 100,000, wherein the polymer has a calculated acid number of 20 to 200, wherein the amount of acid containing monomer, based on the total weight of the polymer is at least 4 percent, preferably 5 to 25 percent.

## DETAILED DESCRIPTION OF THE INVENTION

Pigments which may be used in the invention include organic and inorganic pigments, alone or in combination, such as those as disclosed, for example in U.S. Patents 5,026,427; 5,086,698; 5,141,556; 5,160,370; and 5,169,436. The exact choice of pigments will depend upon the specific application and performance requirements such as color reproduction and image stability. Pigments suitable for use in the present invention include, for example, azo pigments, monoazo pigments, disazo pigments, azo pigment lakes, β-Naphthol pigments, Naphthol AS pigments, benzimidazolone pigments, disazo condensation pigments, metal complex pigments, isoindolinone and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, diketopyrrolo pyrrole pigments, titanium oxide, iron oxide, and carbon black. Typical examples of pigments which may be used include Color Index (C. I.) Pigment Yellow 1, 2, 3, 5, 6, 10, 12, 13, 14, 16, 17, 62, 65, 73, 74, 75, 81, 83, 87, 90, 93, 94, 95, 97, 98, 99, 100, 101, 104, 106, 108, 109, 110, 111, 113, 114, 116, 117, 120, 121, 123, 124, 126, 127, 128, 129, 130, 133, 136, 138, 139, 147, 148, 150, 151, 152, 153, 154, 155, 165, 166, 167, 168, 169, 170, 171, 172, 173, 174, 175, 176, 177, 179, 180, 181, 182, 183, 184, 185, 187, 188, 190, 191, 192, 193, 194; C. I. Pigment Orange 1, 2, 5, 6, 13, 15, 16, 17, 17:1, 19, 22, 24, 31, 34, 36, 3 8, 40, 43, 44, 46, 48, 49, 51, 59, 60, 61, 62, 64, 65, 66, 67, 68, 69; C. I. Pigment Red 1, 2, 3, 4, 5, 6, 7, 8, 9, 10, 11, 12, 13, 14, 15, 16, 17, 18, 21, 22, 23, 31, 32, 38, 48:1, 48:2, 48:3, 48:4, 49:1, 49:2, 49:3, 50:1, 51, 52:1, 52:2, 53:1, 57:1, 60:1, 63:1, 66, 67, 68,81,95,112,114,119,122,136,144,146,147,148,149,150,151,164,166, 168,169,170,171,172,175,176, 177,178,179,181,184,185,187,188,190, 192,194,200,202,204,206,207,210,211,212,213,214,216,220,222,237, 238, 239,240,242,243,245,247,248,251,252,253,254,255,256,258,261, 264; C.I. Pigment Violet 1, 2, 3, 5:1, 13, 19, 23, 25, 27, 29, 31, 32, 37, 39, 42, 44, 50; C.I. Pigment Blue 1, 2, 9, 10, 14, 15:1, 15:2, 15:3, 15:4, 15:6, 15, 16, 18, 19, 24:1, 25, 56, 60, 61, 62, 63, 64, 66; C.I. Pigment Green 1, 2, 4, 7, 8, 10, 36, 45; C.I. Pigment Black 1, 7, 20, 31, 32, and C. I. Pigment Brown 1, 5, 22, 23, 25, 38, 41, 42. In a preferred embodiment of the invention, the pigment employed is C. I. Pigment Blue 15:3, C.I. Pigment Red 122, C.I. Pigment Yellow 155, C.I. Pigment Yellow 74, bis(phthalocyanylalumino) tetraphenyldisiloxane or C.I. Pigment Black 7.

The aqueous carrier medium for the ink composition employed in the invention is water or a mixture of water and at least one water miscible co-solvent. Selection of a suitable mixture depends on the requirements of the specific application, such as desired surface tension and viscosity, the selected pigment, drying time of the pigmented ink jet ink, and the type of paper onto which the ink will be printed. Representative examples of water-miscible cosolvents that may be selected include (1) alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; (2) ketones or ketoalcohols such as acetone, methyl ethyl ketone and diacetone alcohol; (3) ethers, such as tetrahydrofuran and dioxane; (4) esters, such as ethyl acetate, ethyl lactate, ethylene carbonate and propylene carbonate; (5) polyhydric alcohols, such as ethylene glycol, diethylene glycol, triethylene glycol, tetraethylene glycol, propylene glycol, polyethylene glycol, glycerol, 2-methyl-2,4-pentanediol 1,2,6-hexanetriol and thioglycol; (6) lower alkyl mono-or di-ethers derived from alkylene glycols, such as ethylene glycol mono-methyl (or -ethyl) ether, diethylene glycol mono-methyl (or -ethyl) ether, diethylene glycol mono-butyl (or -ethyl) ether, propylene glycol mono-methyl (or -ethyl) ether, poly(ethylene glycol) butyl ether, triethylene glycol mono-methyl (or-ethyl) ether and diethylene glycol di-methyl (or -ethyl) ether, (7) nitrogen containing cyclic compounds, such as pyrrolidone, N-methyl-2-pyrrolidone, and 1,3-dimethyl-2-imidazolidinone; and (8) sulfur-containing compounds such as dimethyl sulfoxide, 2,2'-thiodiethanol, and tetramethylene sulfone.

The amount of water-miscible co-solvent is in the range of approximately 0 to 70 weight %, preferably approximately 1 to 50 weight %, based on the total weight of the ink.

In general it is desirable to make a pigmented ink jet ink in the form of a concentrated mill grind, which is subsequently diluted to the appropriate concentration for use in the ink jet printing system. This technique permits preparation of a greater quantity of pigmented ink from the equipment. If the mill grind was made in a solvent, it is diluted with water and optionally other solvents to the appropriate concentration. If it was made in water, it is diluted with either additional water or water miscible solvents to the desired concentration. By dilution, the ink is adjusted to the desired viscosity, color, hue, saturation density, and print area coverage for the particular application. The method for the preparation of the mill grind is disclosed in U.S. Patents 5,679,138; 5,670,139 and 6,152,999. In a preferred embodiment of the invention, a dispersant is also added to the ink jet ink composition and is used to break down the pigment to submicron size during the milling process and keeps the colloidal dispersion stable and free from flocculation for a long period of time. In the present ink composition, at least 50% by weight of the pigment particles have a particle size equal to or smaller than 200 nm and more preferably equal to or smaller than 100 nm.

In the case of organic pigments, the amount of pigment will generally be in the range of approximately 0.1 to 20%, preferably 0.2 -15.0 by weight of the total ink composition for most ink jet printing applications. If an inorganic pigment is selected, the ink will tend to contain higher weight percentages of pigment than with comparable inks employing organic pigments, and may be as high as approximately 75% in some cases, since inorganic pigments generally have higher specific gravities than organic pigments.

The water-dispersible polyurethane used in this invention has the general formula of (II)

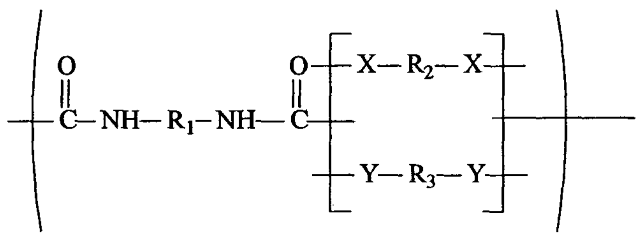

(II)

wherein $R_1$ in the structure (2) above is the central portion of the monomer unit that is the polymerization product of a diisocyante, and is preferably a hydrocarbon group having a valence of two, more preferably containing a substituted or unsubstituted alicyclic, aliphatic, or aromatic group, preferably represented by one or more of the following structures:

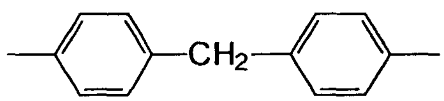

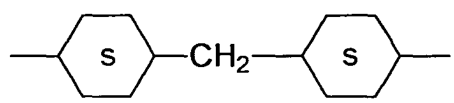

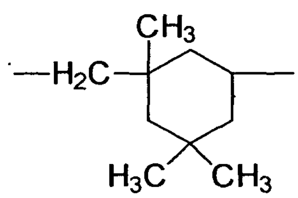

$$-CH_2-(CH_2)_4-CH_2-$$

;

$R_2$ represents the central portion of a monomeric unit that is the polymerization product of a diamine, diol or polyol; and X and Y can be the same or different and are -O- or -N- atom.

Suitable well known diamine chain extenders useful herein include ethylene diamine, diethylene triamine, propylene diamine, butylene diamine, hexamethylene diamine, cyclohexylene diamine, phenylene diamine, tolylene diamine, xylylene diamine, 3,3'-dinitrobenzidene, ethylene methylenebis(2-chloroaniline), 3,3'-dichloro-4,4'-biphenyl diamine. 2,6-diaminopyridine, 4,4'-diamino diphenylmethane, adducts of diethylene triamine with acrylate or its hydrolyzed products, hydrazine, and substituted hydrazines. Suitable well known diol chain extenders useful herein include glycols such as ethylene glycol, propylene-1,2-glycol, propylene-1,3-glycol, diethylene glycol, butane-1,4-diol, hexane-1,6-diol, octane-1,8-diol, neopentyl glycol, 2-methyl propane-1,3-diol, or the various isomeric bis-hydroxymethylcyclohexanes.

Suitable well known polyol chain extenders useful herein include a) a dihydroxy polyester obtained by esterification of a dicarboxylic acid such as succinic acid, adipic acid, suberic acid, azelaic acid, sebacic acid, phthalic, isophthalic, terephthalic, tetrahydrophthalic acid, and the like; b) a polylactone such as polymers of ε-caprolactone and one of the above mentioned diols; and c) a polycarbonate obtained, for example, by reacting one of the above-mentioned diols with diaryl carbonates or phosgene. One or more diamine or diol chain extender can be used.

$R_3$ is the central portion of a monomeric unit containing a phosphoric acid, carboxylic acid or sulfonic acid group, preferably being carboxylic acids, such as 2,2'-bis(hydroxymethyl)propionic acid and hydroxyethylether of 4,4'-bis(4-hydroxyphenyl)valeric acid. The amount of acid monomer used in polymerization, based on the total weight of the polymer preferred to be at least 4 percent, more preferably 5 to 40 percent. The carboxylic acid is converted into its salt using organic or inorganic bases, preferably aqueous alkaline metal hydroxides, such as potassium hydroxide, sodium hydroxide or lithium hydroxide, and ammonium hydroxide are preferred. These materials may be prepared as described in United States Patent: 4,335,029 Dadi, et al. assignee Witco Chemical Corporation (New York,NY) and in Aqueous Polyurethane Dispersions B.K. Kim, Colloid & Polymer Science, Vol. 274, No. 7 (1996) 599-611 © Steinopff Verlag 1996.

Furthermore, the polyurethane of this invention has a Tg of -40 to 200 degrees C, preferably 20 to 180 degrees C, and an weight average molecular weight of 2,000 to 200,000 preferably 4,000 to 100,000, and most preferably 4,000 to 50,000; wherein the amount of acid containing monomer, based on the total weight of the polymer is at least 4 percent, preferably 5 to 25 percent, with a calculated acid number of 20 to 200, preferably 20-160.

The polyurethane used in the invention is present in the ink jet ink generally from 0.1% to 20% by weight, preferably from 0.1% to 10% by weight based on the total weight of the ink.

Jet velocity, separation length of the droplets, drop size and stream stability are greatly affected by the surface tension and the viscosity of the ink. Pigmented ink jet inks suitable for use with ink jet printing systems should have a surface tension in the range of 20 dynes/cm to 60 dynes/cm and, more preferably, in the range 30 dynes/cm to 50 dynes/cm. Control of surface tensions in aqueous inks is accomplished by additions of small amounts of surfactants. The level of surfactants to be used can be determined through simple trial and error experiments. Anionic and cationic surfactants may be selected from those disclosed in U. S. Patents 5,324,349; 4,156,616 and 5,279,654 as well as many other surfactants known in the ink jet ink art. Commercial surfactants include the Surfynols® from Air Products; the Zonyls® from DuPont and the Fluorads® from 3M.

A humectant is added to the composition employed in the process of the invention to help prevent the ink from drying out or crusting in the orifices of the ink jet printhead. Polyhydric alcohol humectants useful in the composition employed in the invention for this purpose include, for example, ethylene glycol, diethylene glycol, triethylene glycol, propylene glycol, tetraethylene glycol, polyethylene glycol, glycerol, 2-methyl-2,4-pentanediol, 1,2,6-hexanetriol and thioglycol. The humectant may be employed in a concentration of from 10 to 50% by weight. In a preferred embodiment, diethylene glycol or a mixture of glycerol and diethylene glycol is employed at a concentration of between 10 and 20%. by weight.

The ink has physical properties compatible with a wide range of ejecting conditions, i.e., driving voltages and pulse widths for thermal ink jet printing devices, driving frequencies of the piezo element for either a drop-on-demand device or a continuous device, and the shape and size of the nozzle.

A penetrant (0-10% by weight) may also be added to the ink composition employed in the process of the invention to help the ink penetrate the receiving substrate, especially when the substrate is a highly sized paper. A preferred penetrant for the inks employed in the present invention is n-propanol at a final concentration of 1-6% by weight.

A biocide (0.01-1.0% by weight) may also be added to the ink composition employed in the process of the invention to prevent unwanted microbial growth which may occur in the ink over time. A preferred biocide for the inks employed in the present invention is Proxel® GXL (Zeneca Colours Co.) at a concentration of 0.05-0.5% by weight. Additional additives which may optionally be present in ink jet inks include thickeners, conductivity enhancing agents, anti-kogation agents, drying agents, and defoamers.

Ink jet inks made using water-dispersible polymers employed in this invention are employed in ink jet printing wherein liquid ink drops are applied in a controlled fashion to an ink receiving substrate, by ejecting ink droplets from plurality of nozzles, or orifices, in a print head of ink jet printers.

Commercially available ink jet printers use several different methods to control the deposition of the ink droplets. Such methods are generally of two types: continuous stream and drop-on-demand.

In drop-on-demand systems, a droplet of ink is ejected from an orifice directly to a position on the ink receiving layer by pressure created by, for example, a piezoelectric device, an acoustic device, or a thermal process controlled in accordance digital data signals. An ink droplet is not generated and ejected through the orifices of the print head unless it is needed. Ink jet printing methods, and related printers, are commercially available and need not be described in detail.

The following examples illustrate the utility of the present invention.

**EXAMPLES**

<u>Example 1</u>

Magenta pigment dispersion was prepared as described below.

| Magenta Pigment Dispersion (MD) | |
|---|---|
| Polymeric beads, mean diameter of 50 micron (milling media) | 325 g |
| Quinacridone magenta (Pigment Red 122) from Sun Chemical Co. | 30 g |
| Oleoyl methyl taurine, (OMT) potassium salt | 9 g |
| Deionized water | 210.8 g |
| Proxel GXL ® (biocide from Zeneca) | 0.2 g |

The above components were milled in a 2 liter double walled vessel obtained from BYK-Gardner using a high energy media mill manufactured by Morehouse-Cowles Hochmeyer. The mill was run for approximately 8 hours at

room temperature. The dispersion was separated from the milling media by filtering the millgrind through a 4-8 µm KIMAX® Buchner Funnel obtained from VWR Scientific Products.

Preparation of Water-Dispersible Polyurethans

PU-C1

In a 2-liter round bottom flask equipped with thermometer, stirrer, water condenser and a vacuum outlet was placed 240.6 g (0.08 moles) polycaprolactone polyol TONE0260 (MW=3000) (Union Carbide). It was dewatered under vacuum at 100°C. The vacuum was released and the following were added at 40°C while stirring: 23.4 g (0.17 moles) 2,2-bis(hydroxymethyl) propionic acid, 54.6 g (0.24 moles) bisphenol-A, 46.2 g (0.51 moles) 1,4-butanediol, 180 g 2-butanone, and 40 drops of dibutyltin dilaurate (catalyst). The temperature was adjusted to 80°C, and when a homogeneous solution was obtained, 235.2 g (1.06 moles) of isophorone diisocyanate was slowly added, followed by 20 g of 2-butanone. The temperature was raised to 85°C and maintained for 16 hours to complete the reaction, resulting in an intermediate containing less than 3% free isocyanate. The free isocyanate content was monitored by Infrared spectroscopy of the absorption peak at 2240 wave number.

The reaction mixture was diluted with acetone and neutralized with 20.64 g of 45% potassium hydroxide solution to achieve 95% stoichiometric ionization based on dimethylol propionic acid. Thirteen hundred grams of distilled water were added to the neutralized mixture under high shear to form a stable aqueous dispersion. 2-Butanone and acetone were removed by heating under vacuum to give an aqueous dispersion at 25% solids. Two glass transition temperatures at 39°C and 79°C respectively were observed by DSC. Weight average molecular weight was 60,800.

PU-C2

In a 2-liter round bottom flask equipped with thermometer, stirrer, water condenser and a vacuum outlet, the following materials were added at 40°C while stirring: 150.00 g ethyl acetate, 6.50 g (0.05 moles) 2,2-bis(hydroxymethyl) propionic acid, 47.91 g (0.45 moles) di(ethylene glycol), and 0.41 g Fascat 2003 (stannous octoate catalyst, ATOCHEM). The temperature was adjusted to 78°C, and when a homogeneous solution was obtained, 111.20 g (0.50 moles) of isophorone diisocyante was added. The temperature was maintained at 76°C for 16 hours to complete the reaction, resulting in an intermediate containing less than 3% free isocyanate. The free isocyanate content was monitored by Infrared spectroscopy of the absorption peak at 2240 wave number.

The reaction mixture was neutralized with 5.73 g of 45% potassium hydroxide solution. 500 g of distilled water was added to the neutralized mixture under high shear to form a stable aqueous solution followed by evaporation under vacuum to remove ethylacetate. The final solution was 25% in solids. Glass transition temperature was 91.6°C as observed by DSC. Weight average molecular weight was 53,700.

PU-C3

In a 1-liter round bottom flask equipped with thermometer, stirrer, water condenser and a vacuum outlet was placed 200.0 g (0.20 moles) polyethyleneglycol polyol (PEG1000, MW=1000) (Aldrich). 88.8 g (0.40 moles)of isophorone diisocyante was added dropwise to the reaction flask. The mixture was stirred at 100°C for 3 hours, then added 24.1 g (0.18 moles) of 2,2-bis(hydroxymethyl) propionic acid. The temperature was maintained at 100°C for additional 3 hours to complete the reaction, resulting in an viscous intermediate. 209.0 g of di(ethylene glycol), 19.6 g of triethylamine and 487.0 g of water were added to the mixture sequentially to obtain a polyurethane solution. Due to the difficulty of removing di(ethylene glycol) to obtain a completely dry sample, DSC was not done. Weight average molecular weight was 47,700.

PU-1

In a 1-liter 3-neck round bottom flask equipped with thermometer; stirrer, water condenser and a vacuum outlet, the following materials were added at 40°C while stirring: 150.00 g ethyl acetate, 10.06 g (0.075 moles) 2,2-bis (hydroxymethyl) propionic acid, 45.10 g (0.425 moles) di(ethylene glycol), and 0.41 g Fascat 2003 (stannous octoate catalyst). The temperature was adjusted to 70°C, and when a homogeneous solution was obtained, 111.20 g (0.50 moles) of isophorone diisocyante and 10.0 g of ethyl acetate were added. The temperature was increased to 75°C and maintained for 30 hours to complete the reaction.

The reaction mixture was neutralized with 8.87 g of 45% potassium hydroxide solution. 750 g of distilled water was added to the neutralized mixture under high shear to form a stable aqueous solution followed by evaporation under vacuum to remove ethylacetate. The final solution was 18% in solids. Glass transition temperature was 90°C, and

weight average molecular weight was 46,600.

PU-2

In a 2-liter 3-neck round bottom flask equipped with thermometer, stirrer, water condenser and a vacuum outlet, the following materials were added at 40°C while stirring: 300.00 g tetrahydrofuran, 71.46 g (0.53 moles) 2,2-bis (hydroxymethyl) propionic acid, 14.14 g (0.13 moles) di(ethylene glycol), and 15 drops of dibutyltin dilaurate (catalyst). The temperature was adjusted to 72°C, and when a homogeneous solution was obtained, 174.76 g (0.67 moles) of 4,4'-methylenebis(cyclohexyl isocyanate) was added. The temperature was maintained at 72°C for 30 hours to complete the reaction.
The reaction mixture was neutralized with 8.87 g of 45% potassium hydroxide solution. 750 g of distilled water was added to the neutralized mixture under high shear to form a stable aqueous solution followed by evaporation under vacuum to remove ethyl acetate. The final solution was 18% in solids. Glass transition temperature was 95°C, and weight average molecular weight was 31,550.

PU-3

In a 2-liter 3-neck round bottom flask equipped with thermometer, stirrer, water condenser and a vacuum outlet, the following materials were added at 40°C while stirring: 100.00 g tetrahydrofuran, 59.56 g (0.444 moles) 2,2-bis (hydroxymethyl) propionic acid, 23.12 g (0.222 moles) neopentyl glycol, and 0.64 g Fascat 2003 (stannous octoate catalyst, ATOCHEM). The temperature was adjusted to 74°C, and when a homogeneous solution was obtained, 174.76 g (0.666 moles) 4,4'-methylenebis(cyclohexyl isocyanate) and 10.0 g of tetrahydrofuran were added. The temperature was maintained at 74°C for 16 hours to complete the reaction.
700 g of tetrahydrofuran, 52.49 g of 45% potassium hydroxide solution and 1500 g of water were added to the mixture sequentially to obtain a polyurethane solution, followed by evaporation under vacuum to remove tetrahydrofuran. The final solution was 14.22% in solids. Glass transition temperature was 125.8°C, and weight average molecular weight was 26,800.

PU-4

In a 2-liter 3-neck round bottom flask equipped with thermometer, stirrer, water condenser and a vacuum outlet, the following materials were added at 40°C while stirring: 100.00 g 2-butanone, 54.46 g (0.406 moles) 2,2-bis (hydroxymethyl) propionic acid, 10.00 g (0.094 moles) di(ethylene glycol), and 20 drops of dibutyltin dilaurate (catalyst). The temperature was adjusted to 70°C, and when a homogeneous solution was obtained, 112.20 g (0.500 moles) isophorone diisocyante and 10.0 g of 2-butanone were added. The temperature was adjusted to 80°C and maintained for 16 hours to complete the reaction.
The mixture was diluted with acetone and neutralized with 22.78 g potassium hydroxide pellets. 600 g of distilled water was added to the neutralized mixture under high shear to form a stable aqueous solution followed by evaporation under vacuum to remove organic solvents. The final solution was 29.04% in solids. Glass transition temperature was 62.3°C, and weight average molecular weight was 19,300.

PU-5

PU-5 was prepared similar to PU-4, except the following materials were used, 100.00 g 2-butanone, 32.46 g (0.242 moles) 2,2-bis(hydroxymethyl) propionic acid, 14.78 g (0.164 moles) of 1,4-butanediol, 10.00 g (0.094 moles) of di(ethylene glycol), 20 drops of dibutyltin dilaurate (catalyst) and 111.20 g (0.500 moles) of isophorone diisocyante. The final solution was 26.22% in solids. Glass transition temperature was 118.3°C, and weight average molecular weight was 22,900.

PU-6

PU-6 was prepared similar to PU-4, except the following materials were used, 100.00 g tetrahydrofuran, 33.50 g (0.250 moles) 2,2-bis(hydroxymethyl) propionic acid, 8.83 g (0.083 moles) of di(ethylene glycol), 10 drops of dibutyltin dilaurate (catalyst) and 87.38 g (0.333 moles) of 4,4'-methylenebis(cyclohexyl isocyanate). The final solution was 19.28% in solids. Glass transition temperature was 115°C, and weight average molecular weight was 54,600.

PU-7

PU-7 was prepared similar to PU-4, except the following materials were used, 100.00 g tetrahydrofuran, 29.78 g (0.222 moles) 2,2-bis(hydroxymethyl) propionic acid, 5.98 g (0.056 moles) of di(ethylene glycol), 12.67 g (0.056 mole) of bisphenol A, 10 drops of dibutyltin dilaurate (catalyst) and 87.38 g (0.333 moles) of 4,4'-methylenebis(cyclohexyl isocyanate). The final solution was 18.08% in solids. Glass transition temperature was 158.7°C, and weight average molecular weight was 85,400.

PU-8

PU-8 was prepared similar to PU-4, except the following materials were used, 100.00 g tetrahydrofuran, 45.07 g (0.336 moles) 2,2-bis(hydroxymethyl) propionic acid, 14.76 g (0.164 moles) of 1,4-butanediol, 043 g of Fascat 2003 (stannous octoate catalyst, ATOCHEM) and 111.20 g (0.500 moles) of isophorone diisocyante. The final solution was 23.81 % in solids. Glass transition temperature was 176.3°C, and weight average molecular weight was 57,700.

PU-9

PU-9 was prepared similar to PU-4, except the following materials were used, 150.00 g tetrahydrofuran, 62.77 g (0.468 moles) 2,2-bis(hydroxymethyl) propionic acid, 64.00 g (0.032 moles) of polycarbonate polyol KM101122 (Mw = 2000) (Stahl Co.), 20 drops of dibutyltin dilaurate (catalyst) and 111.20 g (0.500 moles) of isophorone diisocyante. The final solution was 31.94% in solids. Two glass transition temperatures at 77°C and 86°C respectively were observed by DSC. Weight average molecular weight was 27,700.

PU-10

PU-10 was prepared similar to PU-4, except the following materials were used, 150.00 g tetrahydrofuran, 60.22 g (0.449 moles) 2,2-bis(hydroxymethyl) propionic acid, 63.75 g (0.051 moles) of polycaprolactone polyol TONE0230 (Mw = 1250) (Union Carbide), 20 drops of dibutyltin dilaurate (catalyst) and 111.20 g (0.500 moles) of isophorone diisocyante. The final solution was 31.94% in solids. Glass transition temperature was 49°C, and weight average molecular weight was 76, 800.

Polymer Characterization

Glass Transition Temperature

Glass transition temperature (Tg) of the dry polymer material was determined by differential scanning calorimetry (DSC), using a heating rate of 20°C/minute. Tg is defined herein as the inflection point of the glass transition.

Weight Average Molecular Weight:

The samples were analyzed by size-exclusion chromatography (SEC) with light-scattering detection at 15 and 90 degrees from the incident beam in 1,1,1,3,3,3-hexafluoroisopropanol (HFIP) containing 0.01M tetraethylammonium nitrate at 45°C using two 7.5 mm x 300 mm Plgel mixed-C columns. The absolute molecular weight distribution was calculated from excess Raleigh scattering assuming a random coil model. The specific refractive index increment was obtained by integration of the differential refractive index detector response. Weight average molecular weights (Mw) in HFIP at 45°C are reported. Distributions and molecular weight averages have been corrected for axial dispersion assuming a Gaussian band-broadening function, when appropriate.

Calculated Acid Number:

The calculated acid number is obtained based on the equation shown below.

Calculated acid number =

mole of acid monomer per gram of monomer mixture x 56 (g/mole KOH)

For example, the total monomer mixture to prepare PU-C3 was 312.9 g including polyol, diol, isocyanate and

acid compounds. In which mixture, there was 0.18 moles of bis(hydroxymethyl) propionic acid. The calculation to obtain acid number is: 0.18 mole x 56 g/mole / 312.9 g = 32.

Compositions and properties of the polyurethane described above are summarized in Tables 1 and 2 below for reference. PU-C 1, PU-C2 and PU-C3 are materials for comparison, they have acid number less than 20 or polyalkylene oxide polyol.

Table 1

| Polymer | Diol of MW<750 (wt% of total monomers) | Isocyanate (wt% of total monomers) | Acid (wt% of total monomers) |
|---|---|---|---|
| PU-C1 | TONE0260/BPA/BD (40.1%/9.1%/7.7%) | IPDI (39.2%) | BMPA (3.9%) |
| PU-C2 | DEG (28.9%) | IPDI (67.2%) | BMPA (3.9%) |
| PU-C3 | PEG(1000) (63.9%) | IPDI (28.4%) | BMPA (7.7%) |
| PU-1 | DEG (27.1 %) | IPDI (66.8%) | BMPA (6.0%) |
| PU-2 | DEG (5.4%) | HMDI (67.1%) | BMPA (27.4%) |
| PU-3 | NPG (10.2%) | HMDI (76.8%) | BMPA (26.2%) |
| PU-4 | DEG (5.7%) | IPDI (63.3%) | BMPA (31.0%) |
| PU-5 | BD / DEG (8.8% / 5.9%) | IPDI (66.0%) | BMPA (19.3%) |
| PU-6 | DEG (6.8%) | IPDI (67.4%) | BMPA (25.8% |
| PU-7 | BPA / DEG (9.3% / 4.3%) | HMDI (64.4%) | BMPA (21.9%) |
| PU-8 | BD (8.6%) | IPDI (65.0%) | BMPA (26.4%) |
| PU-9 | KM101122 (26.9%) | IPDI (46.7%) | BMPA (23.4%) |
| PU-10 | TONE0230 (27.1%) | IPDI (47.3%) | BMPA (25.6%) |
| Note: BD=1,4-butanediol; BMPA=bis(hydroxymethyl) propionic acid; BPA=bisphenol A; DEG=di(ethylene glycol); NPG=neopentyl glycol; HMDI=4,4'-methylenebis(cyclohexyl isocyanate); IPDI= isophorone diisocyante; KM101122=polycarbonate polyol, MW=2000; PEG(1000)=poly(ethylene glycol) polyol, MW=1000; TONE0260=polycaprolactone, polyol, MW=3000; TONE0230=polycaprolactone polyol, MW=1250 | | | |

Table 2

| Polymer | Calculated Acid Number | Weight Average Molecular Weight | Glass Transition Temperature (°C) |
|---|---|---|---|
| PU-C1 | 16 | 60,800 | 36 & 79 |
| PU-C2 | 16 | 57,700 | 91.6 |
| PU-C3 | 32 | 47,700 | Not available |
| PU-1 | 25 | 46,600 | 90.0 |
| PU-2 | 115 | 31,550 | 95.0 |
| PU-3 | 109 | 26,800 | 125.8 |
| PU-4 | 129 | 19,300 | 62.3 |
| PU-5 | 80 | 22,900 | 118.3 |
| PU-6 | 108 | 54,600 | 115.0 |
| PU-7 | 92 | 85,400 | 158.7 |
| PU-8 | 110 | 57,700 | 176.3 |
| PU-9 | 110 | 27,700 | 77.86 |
| PU-10 | 107 | 76,800 | 49 |

Ink Preparation

An ink formulation employed in this invention was prepared by mixing all ingredients with mild stirring at room temperature. In addition to magenta pigment PR122 at 2.2% and water-dispersible polyurethane at 2.0%, the ink also contained glycerol at 6%, diethylene glycol at 2%, Dowanol EB ® at 2.5%, and Surfynol 465 ® at 0.2%, all by weight.

The pigment and water-dispersible polyurethanes used in the inks employed in this invention and four comparison inks are given in the following Table 3:

Table 3

| Ink | Polymer Dispersion |
|---|---|
| C-1 (Comp.) | None |
| C-2 (Comp.) | PU-C1 |
| C-3 (Comp.) | PU-C2 |
| C-4 (Comp.) | PU-C3 |
| I-1 | PU-1 |
| I-2 | PU-2 |
| I-3 | PU-3 |
| I-4 | PU-4 |
| I-5 | PU-5 |
| I-6 | PU-6 |
| I-7 | PU-7 |
| I-8 | PU-8 |
| I-9 | PU-9 |
| I-10 | PU-10 |

Comp. = Comparison

Ink Jet Recording Elements

Epson Premium Glossy Photo Paper® S041286, (Epson Corporation), which is a porous glossy receiver, was used for ink jet printing.

Ink Jet Printing

A series of inks having the ingredients shown in Table 3 were added to empty Hewlett-Packard HP 692C ink cartridges and loaded into an HP 692C printer to print on Epson Ink jet receiver. Status A reflectance density as measured by an X-Rite® densitometer on the imaged area of 100% ink coverage was recorded. In addition, these samples were also subjected to dry and wet durability tests. The results are shown in Table 4.

Wet and Dry Rub Resistance

The above inks were coated on the above inkjet recording elements. A wet rub resistance test was carried out by placing an approximately 2.54 cm diameter water droplet on the ink-coated sample surface for 2 minutes, after which the excess water was gently wiped off using a paper towel. The above treated area was then rubbed with a dry paper towel for 8 passes under a pressure of 200 grams over a 3.5 cm diameter area. Status A reflectance density as measured by an X-Rite® densitometer on the tested area was recorded and compared to the optical density before testing. Wet rub resistance is defined as the percentage of optical density (OD) retained after testing. A wet rub resistance of 90% or higher is desirable.

A dry rub resistance test was carried out by rubbing the samples with a dry paper towel for 8 passes under a pressure of 200 grams over a 3.5 cm diameter area. Status A reflectance density as measured by an X-Rite® densitometer on the tested area was recorded and compared to the optical density before testing. Dry rub resistance is defined as the percentage of optical density (OD) retained after testing. A dry rub resistance of 90% or higher is desirable. The results are listed in Table 4 below.

Table 4

| Ink No. | Polyurethane in Ink | Optical density at 100% coverage | Dry Durability (% density retained) | Wet Durability (% density retained) |
|---|---|---|---|---|
| C-1 | None | 2.20 | 67.3 | 46.8 |
| C-2 | PU-C1 | 1.06 | 90.6 | 99.1 |
| C-3 | PU-C2 | 0.70 | 84.3 | 102.9 |
| C-4 | PU-C3 | 2.25 | 92.0 | 81.8 |
| I-1 | PU-1 | 1.91 | 1010 | 104.7 |
| I-2 | PU-2 | 2.06 | 99.0 | 100.0 |
| I-3 | PU-3 | 2.25 | 100.0 | 99.1 |
| I-4 | PU-4 | 2.10 | 99.0 | 97.6 |
| I-5 | PU-5 | 2.08 | 101.4 | 99.5 |
| I-6 | PU-6 | 2.18 | 98.2 | 99.1 |
| I-7 | PU-7 | 2.01 | 100.0 | 98.0 |
| I-8 | PU-8 | 1.83 | 100.5 | 102.7 |
| I-9 | PU-9 | 1.81 | 105.0 | 100.0 |
| I-10 | PU-10 | 1.87 | 99.5 | 100.5 |

The above results show that ink jet inks containing water-dispersible polyurethane in accordance with the invention where printed on porous glossy receiver had good jettability, improved dry and wet rub resistance as compared to the comparison inks.

## Claims

**1.** An ink jet ink composition comprising:

pigment;
water or water and an optional water-miscible co-solvent;
polyurethane of the general Formula II

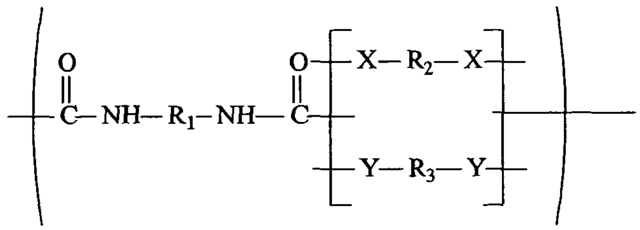

II

wherein:

$R_1$ represents the central portion of the monomeric unit that is the polymerization product of a diisocyanate monomer,
$R_2$ represents the central portion of a monomeric unit that is the polymerization product of a diamine, a diol or a polyol;
$R_3$ is the central portion of a monomeric unit containing a phosphonate, carboxylate or sulfonate group; and
X and Y can be the same or different and are -O- or -N- atom.

**2.** The composition of claim 1 wherein $R_2$ represents the central portion of a monomeric unit that is the polymerization product of polyester polyol, polycarbonate polyol or polylactone polyol.

**3.** The composition of claim 1 wherein water is 40.0 to 99.0% by weight of the entire ink composition.

**4.** The composition of claim 1 wherein the pigment is from 0.1 to 20.0% by weight of the entire ink composition.

**5.** The composition of claim 1 wherein the polyurethane is from 0.1 to 20.0% by weight of the entire ink composition.

**6.** The composition of claim 1 wherein the polyurethane has a Tg of -40 to 200 degrees C.

**7.** The composition of claim 1 wherein the polyurethane has a weight average molecular weight of 4,000 to 100,000.

**8.** The composition of claim 1 wherein at least 50% by weight of the pigment particles have a particle size equal to or smaller than 200 nm.

**9.** An ink jet printing method, comprising the steps of:

A) providing an ink jet printer that is responsive to digital data signals;
B) loading said printer with an ink comprising:

pigment;
water or water and an optional water-miscible co-solvent;
polyurethane of the general Formula II

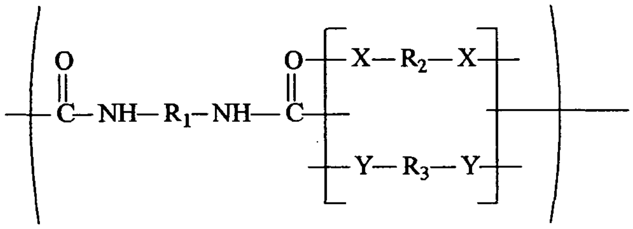

II

wherein:

$R_1$ represents the central portion of the monomeric unit that is the polymerization product of a diisocyanate monomer;
$R_2$ represents the central portion of a monomeric unit that is the polymerization product of a diamine, a diol or a polyol;
$R_3$ is the central portion of a monomeric unit containing a phosphonate, carboxylate or sulfonate group; and
X and Y can be the same or different and are -O- or -N- atom;

C) loading said printer with an ink-receiving element comprising a support having thereon an ink-receiving layer; and
D) printing on said ink-receiving layer using said ink jet ink in response to said digital data signals.

**10.** The method of claim 9 wherein the ink-receiving element comprises a support having thereon a continuous, coextensive, porous ink-receiving layer having interconnecting voids.

European Patent Office

# EUROPEAN SEARCH REPORT

Application Number
EP 03 07 8301

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 136 890 A (CARLSON ET AL) 24 October 2000 (2000-10-24) * column 2, line 66 - column 6, line 50 * * column 20, line 23 - line 33; claims 1-4,8,14-30 * | 1,2 | C08G18/08 C08G18/66 C09D11/00 |
| P,X | WO 03/029318 A (BASF) 10 April 2003 (2003-04-10) * page 3, line 28 - page 10, line 15 * * page 28, line 39 - page 30, line 18; claim 1 * | 1 | |
| A | EP 0 438 090 A (HERBERTS) 24 July 1991 (1991-07-24) * page 2, line 52 - page 7, line 23; claims 1-3; examples * | 1 | |
| A | WO 99/50364 A (AVECIA) 7 October 1999 (1999-10-07) * page 1, line 28 - page 3, line 21; claims 1-11; example 2 * | 1 | |

TECHNICAL FIELDS SEARCHED (Int.Cl.7)

C08G
C09D

The present search report has been drawn up for all claims

| Place of search | Date of completion of the search | Examiner |
|---|---|---|
| The Hague | 4 February 2004 | Bourgonje, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 07 8301

This annex lists the patent family membersrelating to the patent documents cited in the above-mentioned European search report.
The members are as contained in the European Patent Office EDP file on
The European Patent Office is in no way liable for these particulars which are merely given for the purpose of information.

04-02-2004

| Patent document cited in search report | Publication date | Patent family member(s) | Publication date |
|---|---|---|---|
| US 6136890 A | 24-10-2000 | EP 1056814 A1 | 06-12-2000 |
| | | JP 2002503746 T | 05-02-2002 |
| | | WO 9941320 A1 | 19-08-1999 |
| WO 03029318 A | 10-04-2003 | DE 10147404 A1 | 17-04-2003 |
| | | DE 10149268 A1 | 17-04-2003 |
| | | WO 03029318 A1 | 10-04-2003 |
| EP 0438090 A | 24-07-1991 | DE 4000889 A1 | 25-07-1991 |
| | | AT 103961 T | 15-04-1994 |
| | | AU 647441 B2 | 24-03-1994 |
| | | AU 6930891 A | 18-07-1991 |
| | | CA 2034048 A1 | 14-07-1991 |
| | | CN 1054787 A ,B | 25-09-1991 |
| | | DE 59101296 D1 | 11-05-1994 |
| | | DK 438090 T3 | 02-05-1994 |
| | | EP 0438090 A1 | 24-07-1991 |
| | | ES 2055457 T3 | 16-08-1994 |
| | | JP 4218577 A | 10-08-1992 |
| | | KR 125256 B1 | 27-11-1997 |
| | | PT 96471 A ,B | 15-10-1991 |
| | | TR 26853 A | 19-08-1994 |
| | | US 5880209 A | 09-03-1999 |
| | | ZA 9100239 A | 30-10-1991 |
| WO 9950364 A | 07-10-1999 | AU 3265499 A | 18-10-1999 |
| | | EP 1090080 A1 | 11-04-2001 |
| | | WO 9950364 A1 | 07-10-1999 |
| | | JP 2002509975 T | 02-04-2002 |

EPO FORM P0459

For more details about this annex : see Official Journal of the European Patent Office, No. 12/82